# EUROPEAN PATENT SPECIFICATION

(11) **EP 0 533 165 B1**
(45) Date of publication and mention of the grant of the patent: **27.12.1996**
(21) Application number: 92115939.8
(22) Date of filing: 17.09.1992
(51) Int. Cl.: C10M 107/34, C10M 171/00, C09K 5/04

(54) **Lubricating Oils for Fluoroalkane Compressors, Compositions adapted for Fluoroalkane Compressors and composed of Mixtures of said lubricating oils and fluoroalkane, and process for Lubricating Fluoroalkane compressor by using said Lubricating Oils**
Schmieröle für Fluoroalkanverdichter, dafür geeignete Zusammensetzungen, die Mischungen von diesen Schmierölen und Fluoroalkane enthalten und Verfahren zur Schmierung von Fluoroalkanverdichter mit diesen Schmierölen
Huiles lubrifiantes pour compresseurs de fluoroalkane, compositions adaptées à des compresseurs de fluoroalkane comprenant des mélanges de ces huiles lubrifiantes et de fluoroalkane et procédé pour lubrifier ces compresseurs utilisant lesdites huiles

(30) Priority: 19.09.1991 JP 268208/91; 28.02.1992 US 842975
(43) Date of publication of application: 24.03.1993
(73) Proprietor: JAPAN ENERGY CORPORATION, Minato-ku, Tokyo (JP)
(72) Inventor: Kaimai, Takashi, c/o Kyodo Oil Technical Res., Toda City, Saitama Pref. (JP); Tawaki, Hiroki, c/o Kyodo Oil Technical Res., Toda City, Saitama Pref. (JP); Yokoo, Sumio, c/o Nissan Motor Co., Ltd., Yokohama City, Kanagawa Pref. (JP); Arakawa, Yoshie, c/o Nissan Motor Co., Ltd., Yokohama City, Kanagawa Pref. (JP)
(74) Representative: Hansen, Bernd, Dr. Dipl.-Chem.

(56) References cited:
- EP-A- 0 377 122
- EP-A- 0 386 851
- EP-A- 0 400 894
- EP-A- 0 402 009
- EP-A- 0 421 765
- EP-A- 0 461 262
- WO-A-90/05172
- US-A- 4 755 316

## Description

The present invention relates to lubricating oils for flon compressors, compositions adapted for flon compressors and composed of a mixture of such a lubricating oil and flon, and a process for lubricating flon compressors by using such lubricating oils.

More particularly, the invention is suitably applied to cases where a flon hydrofluorocarbon containing no chlorine, for example, a hydrogen-containing flon refrigerant such as 1,1,1,2-tetrafluoroethane (HFC-134a), 1,1,2,2-tetrafluoroethene (HFC-134), 1,1-difluoroethane (HFC-152a), difluoromethane (HFC-32) or pentafluoroethane (HFC-125) (hereinafter referred to briefly as "HFC 134a, etc."), is compressed. The invention can provide particularly excellent lubricating action in these cases.

Flons having fluorine and chlorine as constituting elements, for example, chlorine-containing flons such as trichloromonofluoromethane (CFC-11), dichlorodifluoromethane (CFC-12), and monochlorodifluoromethane (HCFC-22) have been formerly used for air conditioners or car air conditioners as refrigerants. However, since environmental pollution has come to be recognized as a social problem, hydrogen-containing flon refrigerants such as HFC-134a, etc. have been highlighted as an important new type of refrigerants.

On the other hand, although a number of mineral oil-based or synthetic oil-based compounds have been known as lubricating oils for flon compressors, these compounds cannot be used for HFC-134a, etc., because the former have poor miscibility with the latter. Under the circumstances, a number of polyalkylene polyol-based compounds possessing excellent miscibility with HFC-134a have been recently proposed as lubricating oils.

For example, polyoxypropylene glycols (US-4755316) olyoxypropylene glycol monoalkylether having the average molecular weight of 300-1,200 (Japanese patent application Laid-open No. 1-259,093), polyoxypropylene glycol dialkylether having the average molecular weight of 300-700 (Japanese patent application Laid-open No. 1-259,094), and monoalkyl ether of polyoxyethylene polyoxypropylene copolymer (Japanese patent application Laid-open No. 55-58,298, Japanese patent publication No. 61-52,880 and Japanese patent application Laid-open No. 1-259,095) are known. Further, a number of compounds or compositions, for example, specific polyalkylene glycol monoalkyl ether (Japanese patent application Laid-open No. 2-84,491), polyalkylene glycol derivatives, such as those of dimethyl ethers in which hydroxyl groups at opposite terminals of polyalkylene glycol are methyletherified (Japanese patent application Laid-open No. 2-305,893), refrigerator-lubricating oils containing specific polyether polyols having the average molecular weight of 400 to 5,000 and specific esters (U.S. Patent 4,851,144), and refrigerator compositions composed of random polyoxyalkylene glycol (Japanese patent application Laid-open No. 3-103,496, Japanese patent application Laid-open No. 3-103,497 and U.S. Patent 4,971,712) are proposed.

Although currently known polyalkylene polyolbased refrigerator-lubricating oils exhibit excellent miscibility in use together with HFC-134a, etc., it cannot be said that they also exhibit satisfactory lubricating action in this case. Therefore, improvement of performance of these lubricating oils has been desired.

It is an object of the present invention to provide lubricating oils capable of exhibiting excellent miscibility over a wide temperature range and more excellent lubricating action even in an atmosphere of a flon containing no chlorine, such as HFC-134a, etc.

It is another object of the present invention to provide compositions including such lubricating oils and flon refrigerants such as those containing no chlorine, such as HFC-134a, etc., and adapted to be used in flon compressors.

It is a further object of the present invention to provide a process for lubricating flon compressors by using such a lubricating oil.

The present inventors examined the structure of polyalkylene polyol-based compounds and their lubricating action in detail, and discovered that compounds having specific structures exhibit both extremely excellent lubrication action and extremely excellent miscibility. The present invention has been accomplished based on this discovery.

The present invention relates to the lubricating oil for flon compressor, containing as a main ingredient, at least one compound represented by a formula (I):

R₁-[-O-(R₂O)_{y}-(CH₂CH₂O)_{z}-H]_{X} (I)

in which R₁ denotes a hydrocarbon residue derived from a C₁₋₈ alcohol having a valence of 1, R₂ denotes a C₃₋₄ branched alkylene group, x denotes an integer of 1 and y and z each independently denote a positive number, R₂O units and CH₂CH₂O units are block copolymerized in the order shown in formula (I), z/(y+z) is more than 0 but not more than 0.5, and said lubricating oil has a kinetic viscosity of 2-30 cSt at 100°C.

The present invention also relates to the lubricating oil for flon compressors, containing as a main ingredient, a mixture of the compound represented by the above formula (I) wherein the R₁ alcohol may have a valency of 1 to 4 and X may also be 1 to 4, and a compound represented by the following formula (II):

R₃-[-O-(R₄O)ₘ-(CH₂CH₂O)ₙ-R₅]_{ℓ} (II)

in which R₃ denotes a hydrocarbon residue derived from a C₁₋₈ alcohol having one to four hydroxyl groups, R₄ denotes a C₃₋₄ branched alkylene group, R₅ denotes a C₁₋₈ alkyl group, ℓ denotes an integer of 1-4, m and n independently denote a positive number, R₄O units and CH₂CH₂O are block copolymerized, and n/(m+n) is more than 0 but not more than 0.5.

The present invention also relates to the composition for a compressor, containing a minor part of the above-mentioned lubricating oil, and a major part of one or more kinds of flon refrigerant, preferably a fluorine-containing flon refrigerant, more preferably a chlorine-free flon refrigerant, and most preferably hydrogen-containing flon refrigerants selected from the group consisting of 1,1,1,2-tetrafluoroethane (HFC-134a), 1,1,2,2-tetrafluoroethane (HFC-134), 1,1-difluoroethane (HFC-152a), difluoromethane (HFC-32) and pentafluoroethane (HFC-125). "Minor part" and "major part" mean "less than 50% by weight" and "more than 50% by weight", respectively. The preferred amounts are 1-30% by weight and 99-70% by weight, respectively.

The present invention also relates to a process for lubricating a flon compressor by using the above-mentioned lubricating oil, said flon compressor employing one or more kinds of flon refrigerant, preferably a fluorine-containing flon refrigerant, more preferably a chlorine-free flon refrigerant, and most preferably hydrogen-containing flon refrigerants selected from the group consisting of 1,1,1,2-tetrafluoroethane (HFC-134a), 1,1,2,2-tetrafluoroethane (HFC-134), 1,1-difluoroethane (HFC-152a), difluoromethane (HFC-32), and pentafluoroethane (HFC-125).

These and other objects, features and advantages of the invention will be appreciated upon reading the following description of the invention, with the understanding that some modifications, variations and changes of the invention could be made by the skilled person in the art to which the invention pertains without departing from the spirit of the invention or the scope of the claims appended hereto.

The polyoxyalkylenemonoalkylether used in the present invention has a chemical structure in which an oxyalkylene group expressed by -R₂O- is block polymerized with an oxyethylene group expressed by -CH₂CH₂O- (hereinafter referred to briefly as EO) as expressed by the above formula (I).

R₂ in the above -R₂O- is a branched alkylene group having three or four carbons. Examples of such groups include -CH(CH₃)CH₂-, -CH₂CH(CH₃)-, -CH(C₂H₅)CH₂-, -CH₂CH(C₂H₅)-, -CH(CH₃)CH(CH₃)-, and -CH(CH₃)CH₂CH₂-. A part of hydrogen atoms of each of these branched alkylene groups may be substituted by fluorine. As such fluorine-substituted alkylene groups, -CH₂CH(CF₃)- and -CH(CF₃)CH₂- may be recited. Such fluorine-substituted alkylene groups are involved in the C₃₋₄ branched alkylene group as R₂ in the present invention.

The polyoxyalkyleneoxyethylenemonoalkylether used in the present invention is a block copolymer of a C₃₋₄ branched alkylene oxide-polymerized portion (hereinafter referred to briefly as R₂O unit and expressed by (R₂O)_{y}) and an ethyleneoxide-polymerized portion (hereinafter referred to briefly as EO unit and expressed by (EO)_{z}). It has a structure in which as represented by the formula (I), the entire arrangement is that in which R₁, oxygen O, (R₂O)_{y}, (EO)_{z} and hydrogen H are bonded in this order. If the arrangement of the R₂O unit and the EO unit is reversed or the polyoxyalkyleneoxyethylene monoalkylether is a random polymer, lubricity cannot be improved. The above arrangement should be considered as an important feature of the present invention. Lubricity which is conventionally insufficient can be remarkably improved by this arrangement.

It is necessary that the polymerization degrees "y" and "z" of R₂O and EO in the polyoxyalkylene oxyethylene monoalkylether according to the present invention, respectively, are 1 or more, and the ratio (mole ratio) of z/(y+z) is not more than 0.5. This mole ratio is preferably not more than 0.4, more preferably not more than 0.3, most preferably not more than 0.25. An appropriate ratio of z/(y+z) may be determined in view of lubricity, hygroscopic resistance, low temperature flowability, and compatibility with flons. The smaller the value of z/(y+z), the more improved is the hygroscopic resistance. Lubricity largely depends upon the presence of EO. When at least one EO unit is contained, excellent lubricity can be obtained. However, if no EO is contained (z=0, that is, z/(y+z)=0), no excellent lubricity can be obtained. Therefore, the lower limit of the ratio: z/(y+z) is attained when one EO unit is contained per one molecule of the polyoxyalkylene monoalkylether (z=1). The lower limit depends upon the molecular weight of the ether. For example, when R₁ and R₂O in the formula (I) are a methyl group and an oxypropylene group, respectively, the ratios: z/(y+z) are about 0.06, about 0.05, about 0.04, about 0.03 and about 0.02 when the weight average molecular weights are about 1,000, about 1,100, about 1,500, about 2,000 and about 3,000, respectively. In order to obtain more excellent lubricity, it is preferable that the polymerization degree of EO per one molecule of the ether is increased, the ratio: z/(y+z) is preferably not less than 0.05, more preferably not less than 0.1. However, if the ratio is more than 0.5, hygroscopic resistance is deteriorated, and compatibility with the flons drops, and the pour point rises. Therefore, ethers having the ratio of z/(y+z) being greater than 0.5 cannot be used in the present invention. Further, even if one or more EO units are contained per one molecule of the ether and the ratio: z/(y+z) is not more than 0.5 but the ether is a random copolymer or even a block copolymer in which the arrangement of (R₂O)_{y} and (EO)_{z} is reversed not to satisfy the formula (I) of the present invention, such an ether cannot improve lubricity aimed at by the present invention.

The viscosity of the block-polymerized polyoxyalkyleneoxyethylene monoalkylethers used in the present invention is selected depending upon the kind of refrigerant, the type of refrigerator, use conditions, etc. and considering lubricity, sealability, wear resistance, energy saving, etc. The viscosity of the block-polymerized polyoxyalkyleneoxyethylene monoalkylethers according to the present invention is in a range of 2-30 cSt (100°C), and preferably in a range of 4-30 cSt (100°C). If the viscosity is too low, the lubricity is insufficient. The average molecular weight of the block-polymerized polyoxyalkyleneoxyethylene monoalkylether used in the present invention may depend upon the viscosity, and may be selectively set preferably in a range of 300-3,000, more preferably 500-2,500, and most preferably 700-2,500. Particularly when the C1-8 alcohol has a valence of 2 to 4, the average molecular weight of the mixed lubricating oil is preferably not more than 1200. The average molecular weight may be adjusted by appropriately controlling the above x, y and z, or by appropriately mixing block-polymerized polyoxyalkyleneoxyethylenemonoalkylethers having different molecular weights.

In the present invention, two or more kinds of the compounds represented by the formula (I) may be used as a mixture. For example, a mixture having its viscosity adjusted to a necessary value may be obtained by mixing a compound having a kinetic viscosity of 2-5 cSt (100°C) with one having a kinetic viscosity of 10-30 cSt. Further, the lubricating oils according to the present invention may be prepared by mixing, for example, a compound having the viscosity of 2-10 cSt (100°C) with one having the viscosity of 15-50 cSt (100°C) such that the viscosity of the lubricating oil composition may be adjusted to an appropriate value such as 5-25 cSt. In addition, a mixture having the ratio of z/(z+y) adjusted to 0.1-0.5 may be obtained through mixing a compound otherwise of the formula (I) but having the ratio of z/(y+z) of 0.6 and a compound of the formula (I) having the ratio of 0.05-0.4. However, in the latter case, it is preferable from the standpoint of the improvement of the lubricity that a mixing ratio of the compound having the ratio of z/(z+y) being more than 0.5 is not more than 50% by weight of the entire mixture.

R₁ in the formula (I) is a saturated hydrocarbon residue of a C₁₋₈ aliphatic alcohol having a valence of 1 if used in isolation and 1 to 4 if used in admixture with compounds of formula (II). Alkyl groups having more than 8 carbon atoms do not give good miscibility with flons. Therefore, appropriate alkyl groups having 8 or less carbon atoms may be selected depending upon use and use conditions. Those having 6-8 carbon atoms give slightly low two-layer separation temperature on a side of high temperatures. Preferably aliphatic groups having 1-4 carbon atoms or more preferably those having 1-2 carbon atoms may be selected. More specifically, as the saturated hydrocarbon residue of the C₁₋₈ alkyl groups having monovalence, methyl group, ethyl group, propyl group, butyl group, isopropyl group, pentyl group, hexyl group, heptyl group and octyl group may be recited by way of example. With respect to HFC-134a, etc., methyl group, ethyl group and butyl group are preferred, and methyl group and ethyl group are particularly preferred. Hydrogen or hydrogens of the alkyl group may be replaced by fluorine or fluorines. Examples of fluorine-substituted hydrocarbons for R₁ include trifluoromethyl group and trifluoromethylethyl group. With respect to chlorine-containing flons, saturated hydrocarbon residues of C₁₋₈ aliphatic alcohols may be satisfactorily employed without any problem.

With respect to R₁ as the hydrocarbon residue of the alcohols having valences of 2 to 4, hydrocarbon residues derived from alcohols selected from the group consisting of ethylene glycol, propylene glycol, diethylene glycol, 1,3-propanediol, 1,2-butanediol, 1,6-hexanediol, 2-ethyl-1,3-hexane diol, a C₅₋₈ neopentylglycol type bivalent alcohol, trimethylol ethane, trimethylol propane, trimethylol butane, glycerin, 3-methyl-1,3,5-pentanetriol, and pentaerythritol may be recited by way of example.

Hydroxyl groups of these polyvalent alcohols form block copolymers with R₂O and EO as in the case with the above monovalent alcohols, and are substantially entirely etherified. Therefore, x in the formula (I) takes a value corresponding to the number of hydroxyl groups of the original alcohol. That is, x is 1, 2, 3 or 4 for alcohols having one, two, three or four valences, respectively.

The block-polymerized polyoxyalkylene monoalkylether used in the present invention may be produced by any conventional process known for the production of block copolymers. For example, polyoxypropylenepolyoxyethylene monoalkylether may be obtained by obtaining polyoxypropylene glycol monoalkylether through polymerizing a C₁₋₄ monovalent alcohol with propyleneoxide in the presence of a polymerization initiator such as an alkali metal, removing unreacted polypropyleneoxide, and then polymerizing ethyleneoxide with the resulting polyoxypropylene glycol monoalkylether. It is preferable but not always necessary that unreacted raw material is distilled off, and the resulting product is purified, for example, by treating with china clay. The ratio between the R₂O units and the EO units and/or the polymerization degrees thereof can be controlled by adjusting the amounts of the starting materials, and the values for y, z and thus z/(y+z) used herein are thus calculated values calculated from charged amounts of R₂O units and EO units used in the reaction to form the block copolymer of the invention. The above process may be similarly applied when another alcohol and/or another C₃₋₄ alkylene oxide is used as a starting material.

The block copolymer employed in the present invention may be used in a mixed state with a polyether oil such as polyoxyalkylene glycol, polyoxyalkylene glycol diether or polyoxyalkylene glycol glycerolether, or an ester oil such as polyol ester or complex ester. In this case, the mixing ratio of the block copolymer of formula (I) may be adjusted to be not less than 50% by weight, preferably not less than 60% by weight.

Particularly, the mixed lubricating oil obtained by mixing the compound of the formula (I) with that of the formula (II): R₃-[-O-(R₄O)ₘ-(CH₂CH₂O)ₙ-R₅]ℓ has totally excellent performances with respect to lubricity, hygroscopic resistance and compatibility with flons. When the compound of the formula (II) is mixed with the compound of the formula (I), the lubricity is slighty lowered but compatibility with the flons and hygroscopic resistance are improved, as compared with the lubricating oil containing the compound of the formula (I) alone. Therefore, the above mixed oil is a more excellent lubricant oil for flon compressors, which has totally excellent performances such as lubricity, hygroscopicity and compatibility.

R₃, R₄, ℓ, m and n in the formula (II) correspond to R₁, R₂, x, y and z in the formula (I), respectively, and the limitations upon R₃, R₄, ℓ, m and n are almost the same as those for R₁, R₂, x, y and z, respectively. R₅ is a C₁₋₈ alkyl group. If the number of carbons in R₅ exceeds 8, compatibility with flons becomes lower. Consequently, such a mixed lubricating oil cannot be practically used. When the lubricity is considered, the number of carbons in R₅ is preferably not more than 4. More preferably, R₅ is methyl group or ethyl group. The (R₄O) units and (CH₂CH₂O) units constitute the block copolymer, and no limitation may be imposed upon the arranging order of the (R₄O) units and (CH₂CH₂O) units. Particularly when R₃ is a residue of an alcohol having two or more valencies, the ((R₄O) units and (CH₂CH₂O) units are preferably block copolymerized in the arranging order shown in the formula (II). The mixing ratio between the compound of the formula (I) and that of the formula (II) is preferably 25:75 to 75;25, more preferably 30:70 to 70:30, most preferably 40:60 to 60:40 in terms of weight.

The kinetic viscosity of the mixed lubricating oil composed of the compound of the formula (I) and the compound of the formula (II) for flon compressors is preferably 2-30 cSt at 100°C, more preferably 4-30 cSt at 100°C as in the case of the lubricating oil for the flon compressor containing the compound of the formula (I). The viscosity of the mixed lubricanting oil may be adjusted by appropriately controlling x, y and z in the formula (I) and/or ℓ, m and n in the formula (II) or by appropriately mixing compounds of the above formulae (I) and (II) having different viscosities.

Cresol-based antioxidants such as di-tert-butyl-cresol, amine-based antioxidants such as phenyl-α-naphthylamine or N,N'-di(2-naphthyl)-p-phenylenediamine, wear inhibitors such as zinc dithiophosphate, phosphate ester, phosphite, chlorinated phosphate ester, molybdenum phosphate or molybdenum carbamate, chlorinated paraffins, sulfur-based extreme pressure additives such as sulfurized oil, another extreme pressure additive such as lead soap, oiliness improvers such as fatty acid, defoaming agents such as silicone-based compounds, metal-inactivating agents such as benzotriazole, and/or additives such as epoxy-based compounds may optionally be compounded with the lubricating oil of the invention in amounts readily determinable by those of ordinary skill in the art, singly or in combination.

The lubricating oil according to the present invention is filled and used in a flon compressor together with flon, preferably, a chlorine-free flon such as HFC-134a, etc., in the form of a mixed liquid. The lubricating oil composition according to the present invention may be also used in the same manner. The liquid composition forms a stably miscible phase at least in a temperature range of -50°C to +15°C, preferably -50°C to +30°C, more preferably -60°C to +50°C. It exhibits excellent performance for lubricating the flon compressor using HFC-134a, etc.

The pour point of the lubricating oil according to the present invention is preferably not more than -20°C, more preferably -20°C to -80°C.

The lubricating oil according to the present invention for use in the flon compressor has extremely excellent lubricity, exhibits extremely excellent load-withstanding properties and extremely excellent wear resistance when used together with flon containing no chlorine, for example, HFC-134a, HFC-134, HFC-152a, HFC-32 and HFC-125, and stability with such flons, and hygroscopic resistance. This lubricating oil also exhibits excellent effects with respect to conventional flons other than the above HFC-134a, etc.

The lubricating oil and the lubricating oil composition according to the present invention can be used as lubricants for various compressors of reciprocating type, rotary type, centrifugal type, swash plate type, etc. to be used in freezers, refrigerators, automobile, room or industrial air conditioners, etc.

### Examples and Comparative Examples:

The present invention will be explained in more detail with reference to examples and comparative examples. These examples are not to be construed as exclusive examples of the present invention.

I. Preparation of lubricating oils (Lubricating oils A1-A15 and B1-B8):

Lubricating oils A1-A15 are examples of the present invention, and lubricating oils B1-B8 are comparative examples. Lubricating oils A1-A9 and A13-A15 in Table 1 and lubricating oils B1-B7 in Table 2 were each synthesized by polymerizing propylene oxide and ethylene oxide with an alcohol corresponding to R₁ in the formula (I), followed by purification, as mentioned below.

A lubricating oil Al shown in Table 1 was prepared as follows:

116 g methanol and 12 g sodium methylate were charged into a 5-liter autoclave. After the autoclave atmosphere was fully replaced by nitrogen gas, 3,128 g propylene oxide were gradually dropwise added to the mixture in a temperature range of 100-120°C under pressure of 1-7 kg/cm²G, and the mixture was subjected to reaction for 14 hours. After the reaction mixture was cured for 2 hours, unreacted propylene oxide was removed by blowing nitrogen gas into the reaction mixture. Then, 695 g ethyleneoxide were added to the reaction mixture in a temperature range of 100-140°C under pressure of 1-7 kg/cm²G in 1 hour, and the resulting reaction mixture was cured for 2 hours under the same conditions. Then, unreacted ethylene oxide was removed by blowing nitrogen gas into the reaction mixture. After cooling, the reaction mixture was transferred into a 5-liter egg-plant flask, neutralized with an acid, and dewatered at 120°C in a vacuum of 20 mmHg (≈ 2.7 kPa) or less for 2 hours by blowing nitrogen gas thereinto. After cooling, 3,925 g lubricating oil Al (polyoxypropyleneoxyethylene monomethylether) were obtained by removing a salt with a filter. The ratio of z/(y+z) of A1 was determined as 0.20 by NMR, which was almost equal to z/(y+z)=0.23 calculated from charged amounts of propylene oxide and ethylene oxide.

A lubricating oil B4 as a random copolymer was produced as follows:

The B4 random copolymer was obtained in the same manner as in the production of the above-mentioned A1 block copolymer except that 116 g methanol and 12 g sodium methylate were charged into the 5-liter autoclave, and a mixed liquid of 3,200 g propylene oxide and 620 g ethylene oxide was used instead of propylene oxide in the case of A1 after sufficient replacement with nitrogen gas. 3,845 g of lubricating oil B4 (random copolymer) was obtained.

Each of lubricating oils A2-A9, A13-A15, B1-B3 and B5-B7 was produced in the same manner as mentioned above except that the kind and the amount of an alkanol, amount of the oxides, and the order of dropwise adding were varied.

Lubricating oils A10-A12 were lubricating oils each obtained by mixing two kinds of the above-prepared lubricating oils at a ratio given in Table 1. A lubricating oil B8 shown in Table 2 is a commercially available polyoxyalkylene monoalkylether compound manufactured by Sankyo Chemical Co., Ltd. under a tradename of Newpol 50 HB-2000.

II. With respect to the lubricating oils as the examples and comparative examples, their physical properties and performances, average molecular weight, kinetic viscosity, pour point, and miscibility and lubricity with flon refrigerants were measured. Since the ratio of z/(y+z) of A1 determined by NMR was almost equal to the calculated value (rounded off) and the production yield is almost 100%, the ratios of z/(y+z) were calculated from charged amounts of propylene oxide and ethylene oxide used in the reaction. Results are shown in Tables 1 and 2. Testing methods used for these measurement are outlined as follows:

### Average molecular weight

The weight average molecular weight was measured by GPC (gel permeation chromatography).

### Kinetic viscosity

Kinetic viscosity was measured according to JIS K 2283.

### Pour point

Pour point was measured according to JIS K 2269.

### Miscibility with refrigerant

After 0.6 g of each lubricating oil and 2.4 g refrigerant (HFC-134a) were sealingly charged into a glass tube, the mixture was cooled at a cooling rate of 1°C/min. A temperature at which the mixture was separated into two layers in a low temperature range, that is, a two-layer separation temperature on the lower temperature side, was measured. As to a two-layer separation temperature on the upper temperature side, the above mixture was heated at a heating rate of 1°C/min. starting from room temperature, and the temperature at which the mixture was separated into two layers was measured.

### Lubricity

(1) Falex seizing load was measured according to ASTM D-3233-7 in a HFC-134a or HFC-32 blown atmosphere (70 ml/min.). FC-20 (gray iron casting specified in JIS G5501) and AISI 1137 (free cutting carbon steel, equivalent to JIS G4808 SUM 41) were used as materials of a test pin and a test block, respectively.
(2) A worn amount of the test pin was measured by effecting 1-hour wearing test in HFC-134a blown atmosphere (70 ml/min.) with a Falex tester at 290 rpm under a load of 300 lbf (≈ 1.3 k Newton) at a given temperature (initial temperature: 40°C) by using the test pin (FC-20) and the test block (AISI 1137).
(3) Testing was effected under the following conditions by using a car air-conditioner compressor manufactured by Zexcell Co., Ltd. under a tradename of KC-31. After the testing (200 hours of continuous operation), a worn level of a main bearing of the compressor and a content of metals (iron and aluminum) in the lubricating oil were measured.

| | |
|---|---|
| Amount of refrigerant HFC-134a | 1 kg |
| Amount of lubricating oil | 0.12 kg |
| Number of revolutions | 500 rpm |
| Discharge pressure | 19 kg/cm² |
| Suction pressure | 1.7 kg/cm² |
| Temperature of discharge gas | 130°C |

Evaluation results are shown in Tables 1 and 2.

As to A-6, A-7, B-7 and B-9, no compressor test was effected for the following reasons.

A-6 has a very low two-layer separation temperature of 15°C on the higher temperature side. As to A-7, since it has a very low kinetic viscosity of 3 cSt at 100°C, sealingness can not be kept. B-7 has a very high pour point of -12.5°C. B-8 has a very low two-layer separation temperature of 14°C on the higher temperature side.

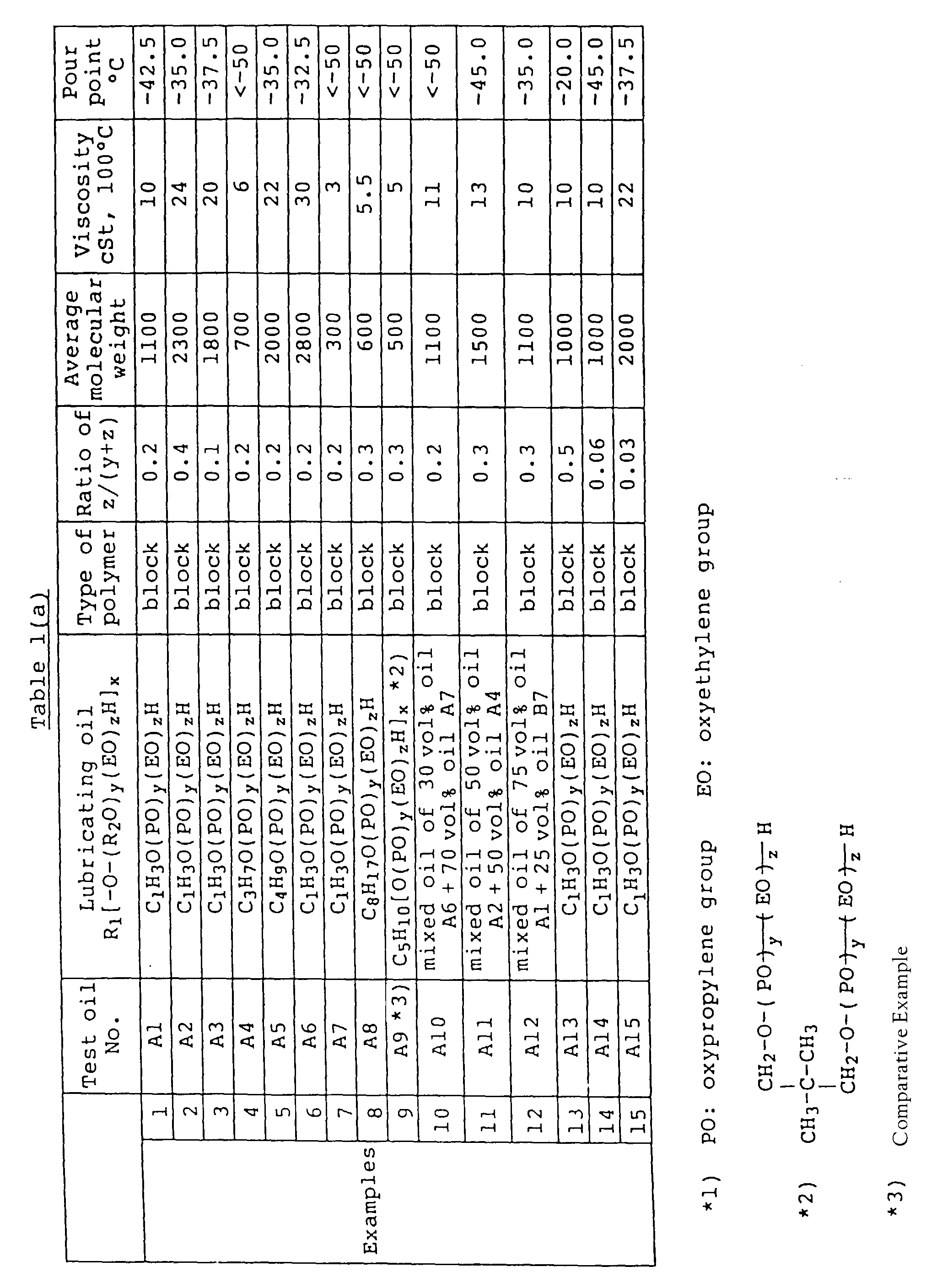

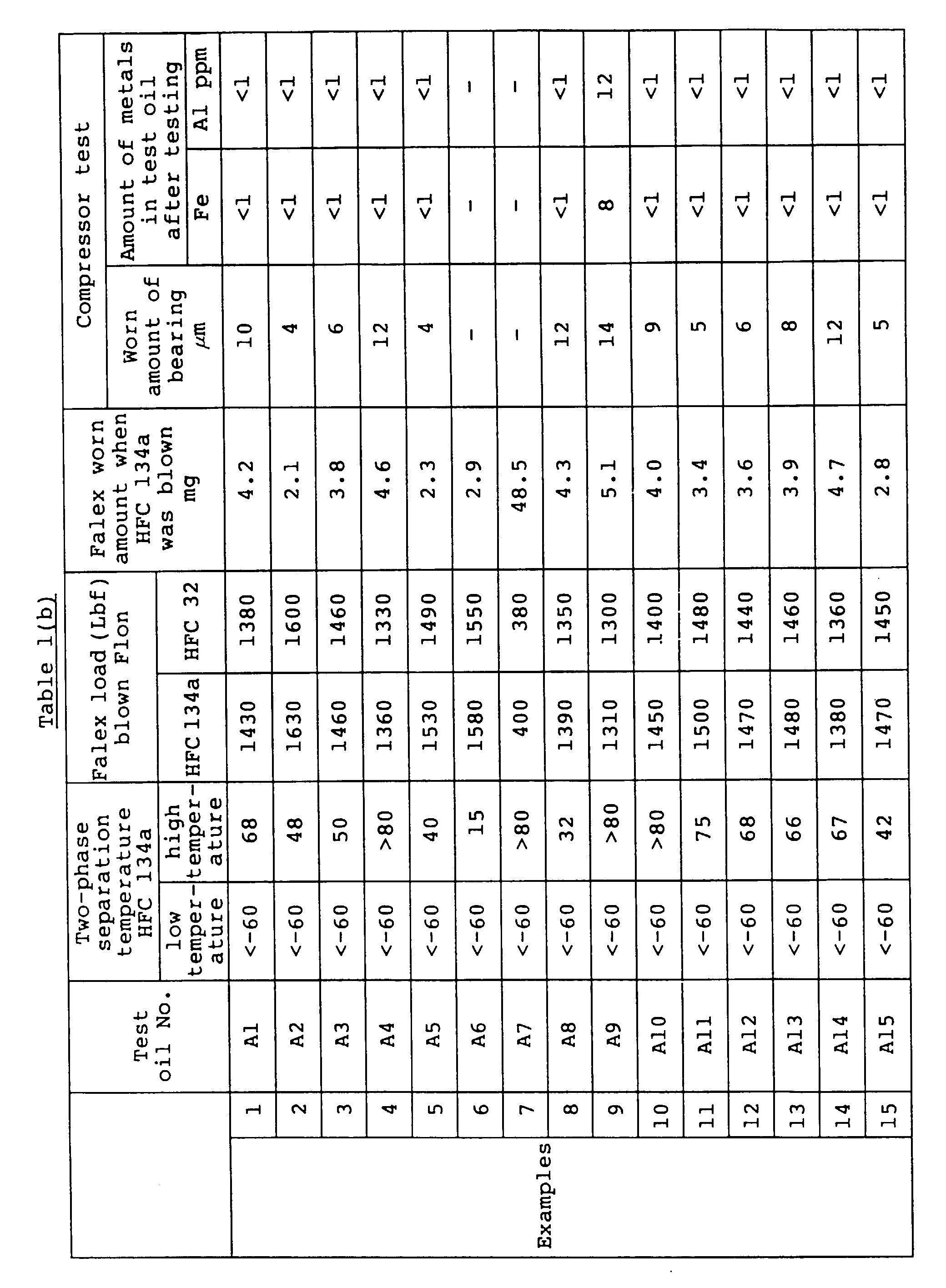

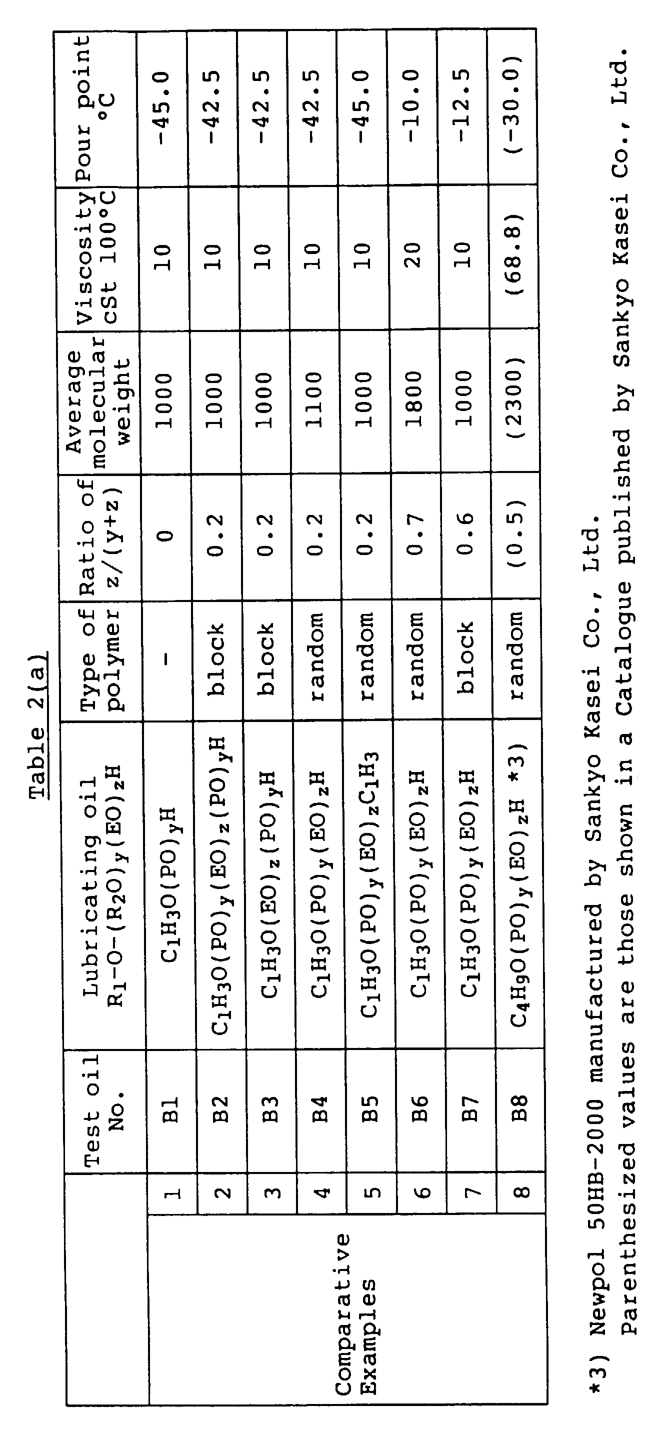

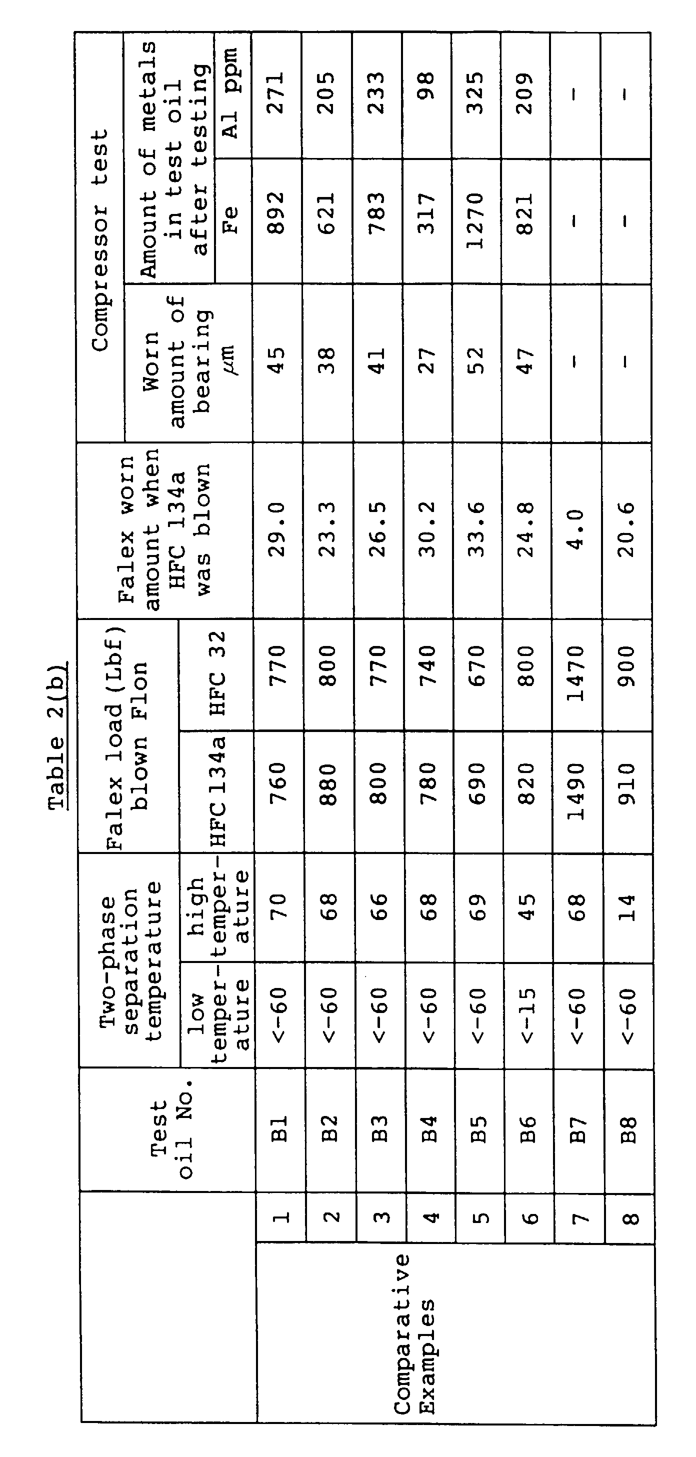

It is seen that the lubricating oils composed of the block copolymers of polyoxypropyleneoxyethylenemonoalkylethers according to the present invention exhibit excellent miscibility with the refrigerant, and more excellent lubricity as compared with the random copolymers.

For example, the Falex seizing load of the lubricating oils is as high as 1,300-1,600 lbf (≈ 5.8-7.1 k Newton), and the worn amounts are not more than 5 mg, and no wearing was observed in the compressor test.

On the other hand, since Comparative Example B1 has no oxyethylene within the polymer, its lubricity is low. B4, B5, B6 and B8 are random polymers, and could not exhibit good lubricity. Although B2 and B3 are block copolymers, they have a structure in which hydroxyl groups are attached to oxypropylene. Therefore, since the methyl group of the oxypropylene group interrupts formation of a strong adsorbing film with the hydroxyl groups, high lubricity cannot be obtained. Since B7 is a block copolymer having the same arrangement as in the present invention, its lubricity is good. However, since the ratio z/(z + y) of B7 is as large as 0.6, its pour point is unfavorably high.

As mentioned above, the specific block copolymers according to the present invention have extremely excellent lubricity and are miscible with fluorine-containing flon. These block copolymers can be said to be lubricating oils capable of overcoming reduction in lubricity due to change in lubricating oils from the chlorine-containing flon to hydrogen-containing flon such as HFC-134a, HFC-32, HFC-125 or the like.

The lubricating oils according to the present invention are lubricating oils which can exhibit excellent miscibility over a wide temperature range, low hydroscopicity and extremely high lubricity even under refrigerant conditions with a hydrogen-containing flon such as HFC-134a, HFC-134, HFC-152a, HFC-32, HFC-125 or the like. Thus, the lubricating oils according to the present invention are suitable as lubricating oils for freezers. Furthermore, the lubricating oils exhibit excellent performance even under conditions with conventional CFC-12, CFC-22, or the like.

III. With respect to a mixed lubricating oil obtained by mixing a compound of the formula (I) with a compound of the formula (II), characteristics of lubricating oils were evaluated.

As the compound of the formula (I) and the compound of the formula (II), the polyoxyalkylene monoalkylether (A1) and polyoxyalkylene dialkylether represented by CH₃-O-(R₄O)ₘ-(CH₂CH₂O)ₙ-CH₃ (hereinafter referred to briefly as Cl) were used, respectively. In the C1, (R₄O) is an oxypropylene group, m/n is 8/2, the molecular weight was 1,000, and the viscosity was about 10 cSt (100°C).

With respect to lubricating oils obtained by mixing A1 and/or C1 at respective mixing recipes shown in Table 3, lubricity, compatibility, hygroscopic resistance, and compressor testing were evaluated. Results are shown in Table 3.

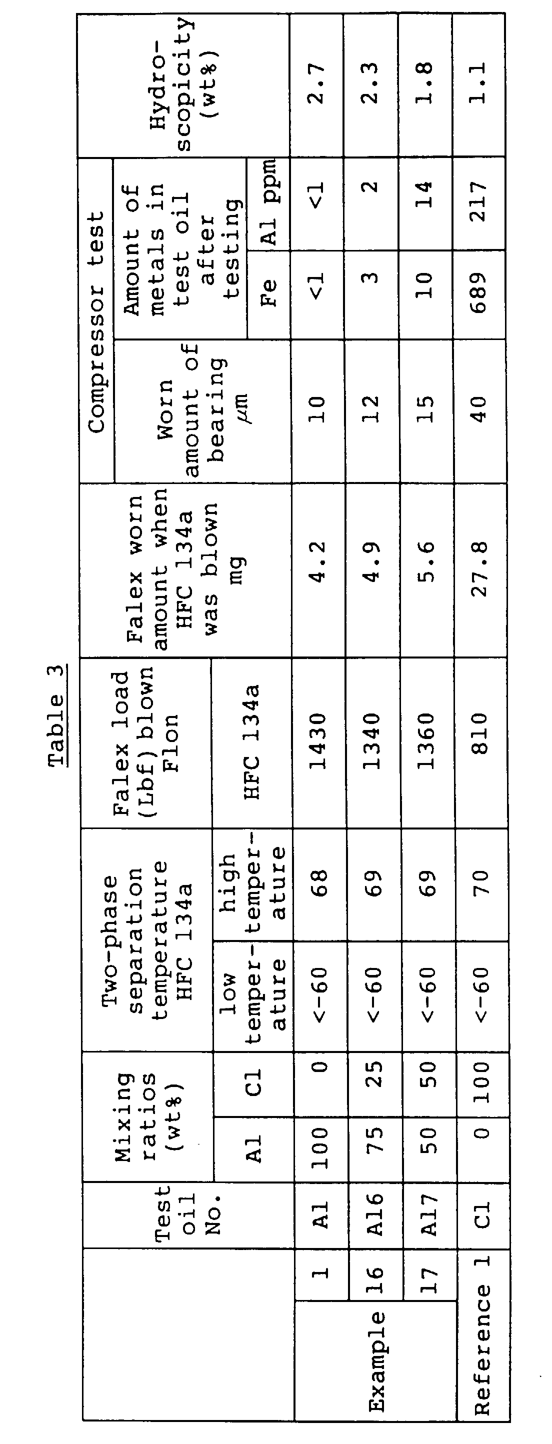

The lubricity, the hygroscopic resistance, and the compressor test were evaluated in the same manners as mentioned above, and the hygroscopicity was evaluated in the following manner.

### Hygroscopicity:

Into a beaker of 100 ml was charged 60 g of the test lubricant, which was left to stand at a temperature of 30°C under humidity of 80% for 7 days and then the content of water in the lubricant was measured.

From Table 3, it is seen that although the lubricating oil composed of the C1 alone had low hygroscopicity but insufficient wear resistance, the mixed oil obtained by mixing A1 with the C1 exhibited excellent wear resistance near that of the A1, and low hygroscopicity. Thus, the mixed lubricating oils had excellent performances as the lubricating oil for refrigerator.

## Claims

1. A lubricating oil for flon compressor, containing at least one compound represented by a formula (I)
R₁-[-O-(R₂O)_{y}-(CH₂CH₂O)_{Z}-H]_{X} (I)
in which R₁ denotes a hydrocarbon residue derived from a C₁₋₈ alcohol having a valence of 1, R₂ denotes a C₃₋₄ branched alkylene group, x denotes an integer of 1, and y and z each independently denote a positive number, R₂O units and CH₂CH₂O units are block copolymerized in an order shown in the formula (I), and z/(y+z) is more than 0 but not more than 0.3, and said lubricating oil having a kinetic viscosity of 2-30 cSt at 100°C.

2. The lubricating oil according to claim 1, wherein R₁ is selected from the group consisting of a methyl group, an ethyl group, a propyl group, a butyl group, a pentyl group, a hexyl group, a heptyl group, and an octyl group, trifluoromethyl group and trifluoromethylethyl group.

3. The lubricating oil according to claim 1, wherein z/(y+z) is 0.05-0.3.

4. A lubricating oil for flon compressor, containing at least one compound represented by a formula (I)
R₁-[-O-(R₂O)_{y}-(CH₂CH₂O)_{Z}-H]_{X} (I)
in which R₁ denotes a hydrocarbon residue derived from a C₁₋₈ alcohol having a valence of 1 to 4, R₂ denotes a C₃₋₄ branched alkylene group, x denotes an integer of 1-4, and y and z each independently denote a positive number, R₂O units and CH₂CH₂O units are block copolymerized in an order shown in the formula (I), and z/(y+z) is, when said C₁₋₈ alcohol has the valence of 1, more than 0 but not more than 0.3, and, when said C₁₋₈ alcohol has the valence of 2 to 4, more than 0 but not more than 0.5, which further contains at least one compound represented by a formula (II):
R₃-[-O-(R₄O)ₘ-(CH₂CH₂O)ₙ-R₅]_{ℓ} (II)
in which R₃ denotes a hydrocarbon residue derived from a C₁₋₈ alcohol having one to four hydroxyl groups, R₄ denotes a C₃₋₄ branched alkylene group, R₅ denotes a C₁₋₈ alkyl group, ℓ denotes an integer of 1-4, m and n independently denote a positive number, R₄O units and CH₂CH₂O are block copolymerized, and n/(m+n) is more than 0 but not more than 0.5, and
said lubricating oil having a kinetic viscosity of 2-30 cSt at 100°C.

5. The lubricating oil according to Claim 4, wherein R₃ denote a hydrocarbon residue of a monoalcohol having one hydroxyl group, or a methyl group or an ethyl group.

6. The lubricating oil according to Claim 4, wherein a mixing ratio of the compound of the formula (I) and the compound of the formula (II) is 25:75 to 75:25 in terms of weight.

7. A lubricating oil/refrigerant composition for a flon compressor, comprising a major part of a flon refrigerant, and a minor part of the flon compressor lubricating oil claimed in any one of claims 1-4.

8. The lubricating oil/refrigerant composition according to claim 7, wherein said composition comprises 1-30% by weight of the lubricating oil and 99-70% by weight of the flon refrigerant.

9. The lubricating oil/refrigerant composition according to claim 7, wherein the flon refrigerant is a chlorine-free flon refrigerant.

10. The lubricating oil/refrigerant composition according to claim 7, wherein the flon refrigerant is at least one hydrogen-containing flon refrigerant selected from the group consisting of 1,1,1,2-tetrafluoroethane, 1,1,2,2-tetrafluoroethane, 1,1-difluoroethane, difluoromethane and pentafluoroethane.

11. A process for lubricating a flon compressor by using in said flon compressor the lubricating oil claimed in any one of claims 1-6.

12. The lubricating process according to claim 11, wherein said composition comprises 1-30% by weight of the lubricating oil and 99-70% by weight of the flon refrigerant.

13. The lubricating process according to claim 11, wherein the flon refrigerant is a chlorine-free flon refrigerant.

14. The lubricating process according to claim 11, wherein the flon refrigerant is at least one hydrogen-containing flon refrigerant selected from the group consisting of 1,1,1,2-tetrafluoroethane, 1,1,2,2-tetrafluoroethane, 1,1-difluoroethane, difluoromethane and pentafluoroethane.

## Patentansprüche

1. Ein Schmieröl für einen Flon-Kompressor, welches mindestens eine durch eine Formel (I)
R₁-[-O-(R₂O)_{y}-(CH₂CH₂O)_{z}-H]ₓ (I)
dargestellte Verbindung enthält, in welcher R₁ einen Kohlenwasserstoffrest bezeichnet, der von einem C₁₋₈- Alkohol mit einer Wertigkeit von 1 abgeleitet ist, R₂ eine verzweigte C₃₋₄-Alkylengruppe bezeichnet, x eine ganze Zahl von 1 bezeichnet und y und z unabhängig voneinander je eine positive Zahl bezeichnen, die R₂O-Einheiten und CH₂CH₂O-Einheiten in einer in der Formel (I) gezeigten Reihenfolge blockcopolymerisiert sind und z/(y+z) größer als 0 aber nicht größer als 0,3 ist, wobei das genannte Schmieröl bei 100°C eine kinetische Viskosität von 2 - 30 cSt hat.

2. Das Schmieröl gemäß Anspruch 1, worin R₁ ausgewählt ist aus der Gruppe, welche aus einer Methylgruppe, einer Ethylgruppe, einer Propylgruppe, einer Butylgruppe, einer Pentylgruppe, einer Hexylgruppe, einer Heptylgruppe und einer Octylgruppe, einer Trifluormethylgruppe und einer Trifluormethylethylgruppe besteht.

3. Das Schmieröl gemäß Anspruch 1, worin z/(y+z) 0,05 - 0,3 ist.

4. Ein Schmieröl für Flon-Kompressoren, welches mindestens eine durch eine Formel (I)
R₁-[-O-(R₂O)_{y}-(CH₂CH₂O)_{z}-H]ₓ (I)
dargestellte Verbindung enthält, in der R₁ einen Kohlenwasserstoffrest bezeichnet, welcher von einem C₁₋₈-Alkohol mit einer Wertigkeit von 1 bis 4 abgeleitet ist, R₂ eine verzweigte C₃₋₄-Alkylengruppe bezeichnet, x eine ganze Zahl von 1 - 4 bezeichnet und y und z abhängig voneinander je eine positive Zahl bezeichnen, die R₂O-Einheiten und CH₂CH₂O-Einheiten in der in der Formel (I) gezeigten Reihenfolge blockcopolymerisiert sind und z/(y+z) größer als 0 aber nicht größer als 0,3 ist, wenn der genannte C₁₋₈-Alkohol eine Wertigkeit von 1 hat und größer als 0 aber nicht größer als 0,5 ist, wenn der genannte C₁₋₈-Alkohol eine Wertigkeit von 2 bis 4 hat, und welches darüber hinaus mindestens eine durch eine Formel (II)
R₃-[-O-(R₄O)ₘ-(CH₂CH₂O)ₙ-R₅]_{*l*} (II)
dargestellte Verbindung enthält, in welcher R₃ einen Kohlenwasserstoffrest bezeichnet, der von einem C₁₋₈-Alkohol abgeleitet ist, welcher eine bis vier Hydroxylgruppen enthält, R₄ eine verzweigte C₃₋₄-Alkylengruppe bezeichnet, R₅ eine C₁₋₈-Alkylgruppe bezeichnet, *l* eine ganze Zahl zwischen 1 - 4 bezeichnet, m und n abhängig voneinander eine positive Zahl bezeichnen, R₄O-Einheiten und CH₂CH₂O blockcopolymerisiert sind und n/(m+n) größer als 0 aber nicht größer als 0,5 ist, wobei das genannte Schmieröl bei 100°C eine kinetische Viskosität von 2 - 30 cSt hat.

5. Das Schmieröl gemäß Anspruch 4, worin R₃ einen Kohlenwasserstoffrest eines einwertigen Alkohols mit einer Hydroxylgruppe oder eine Methylgruppe oder eine Ethylgruppe bezeichnet.

6. Das Schmieröl gemäß Anspruch 4, worin ein Mischungsverhältnis der Verbindung mit der Formel (I) zu der Verbindung mit der Formel (II) bezüglich des Gewichts zwischen 25:75 und 75:25 liegt.

7. Eine Schmieröl/Kältemittel-Zusammensetzung für einen Flon-Kompressor, welches als Hauptbestandteil ein Flon-Kältemittel und als Nebenbestandteil das Schmieröl für einen Flon-Kompressor enthält, welches in irgend einem der Ansprüche 1 bis 4 beansprucht ist.

8. Die Schmieröl/Kältemittel-Zusammensetzung gemäß Anspruch 7, worin die genannte Zusammensetzung 1 - 30 Gew.-% des Schmieröls und 99 - 70 Gew.-% des Flon-Kältemittels enthält.

9. Die Schmieröl/Kältemittel-Zusammensetzung gemäß Anspruch 7, worin das Flon-Kältemittel ein chlorfreies Flon-Kältemittel ist.

10. Die Schmieröl/Kältemittel-Zusammensetzung gemäß Anspruch 7, worin das Flon-Kältemittel ein mindestens einen Wasserstoff enthaltendes Flon-Kältemittel ist, welches aus der Gruppe ausgewählt ist, die aus 1,1,1,2-Tetrafluorethan, 1,1,2,2-Tetrafluorethan, 1,1-Difluorethan, Difluormethan und Pentafluorethan besteht.

11. Ein Verfahren zum Schmieren eines Flon-Kompressors, bei dem in dem genannten Flon-Kompressor das in einem der Ansprüche 1 bis 6 beanspruchte Schmieröl eingesetzt wird.

12. Das Schmierverfahren gemäß Anspruch 11, worin die genannte Zusammensetzung 1 - 30 Gew.-% des Schmieröls und 99 - 70 Gew.-% des Flon- Kältemittels enthält.

13. Das Schmierverfahren gemäß Anspruch 11, worin das Flon-Kältemittel ein chlorfreies Flon-Kältemittel ist.

14. Das Schmierverfahren gemäß Anspruch 11, worin das Flon-Kältemittel ein mindestens einen Wasserstoff enthaltendes Flon-Kältemittel ist, welches aus der Gruppe ausgewählt ist, die aus 1,1,1,2-Tetrafluorethan, 1,1,2,2-Tetrafluorethan, 1,1-Difluorethan, Difluormethan und Pentafluorethan besteht.

## Revendications

1. Huile de lubrification pour compresseur de flon, contenant au moins un composé représenté par la formule (I)
R₁-[-O-(R₂O)_{y}-(CH₂CH₂O)_{z}-H]ₓ (I)
dans laquelle R₁ représente un résidu d'hydrocarbure dérivé d'un alcool en C₁-C₈ ayant une valence de 1, R₂ représente un groupe alkylène ramifié en C₃-C₄, x représente un nombre entier égal à 1, et y et z représentent chacun indépendamment un nombre positif, les motifs R₂O et CH2CH₂O sont copolymérisés en séquence dans l'ordre indiqué dans la formule (I), et z/(y+z) est supérieur à 0 mais non supérieur à 0,3, et ladite huile de lubrification a une viscosité cinétique de 2-30 cSt à 100°C.

2. Huile de lubrification selon la revendication 1, dans laquelle R₁ est choisi dans le groupe constitué d'un groupe méthyle, d'un groupe éthyle, d'un groupe propyle, d'un groupe butyle, d'un groupe pentyle, d'un groupe hexyle, d'un groupe heptyle, et d'un groupe octyle, d'un groupe trifluorométhyle et d'un groupe trifluorométhyléthyle.

3. Huile de lubrification selon la revendication 1, dans laquelle z/(y+z) est 0,05-0,3.

4. Huile de lubrification pour compresseur de flon, contenant au moins un composé représenté par la formule (I)
R₁-[-O-(R₂O)_{y}-(CH₂CH₂O)_{z}-H]ₓ (I)
dans laquelle R₁ représente un résidu d'hydrocarbure dérivé d'un alcool en C₁-C₈ ayant une valence de 1 à 4, R₂ représente un groupe alkylène ramifié en C₃-C₄, x représente un nombre entier de 1 à 4, et y et z représentent chacun indépendamment un nombre positif, les motifs R₂O et CH₂CH₂O sont copolymérisés en séquence dans l'ordre indiqué dans la formule (I), et z/(y+z) est, lorsque ledit alcool en C₁-C₈ a une valence égale à 1, supérieur à 0 mais non supérieur à 0,3, et, lorsque ledit alcool en C₁-C₈ a une valence égale à 2 à 4, supérieur à 0 mais non supérieur à 0,5, qui contient en outre au moins un composé représenté par la formule (II) :
R3-[-O-(R₄O)m-(CH₂CH₂O)ₙ-R₅]_{ℓ} (II)
dans laquelle R₃ représente un résidu d'hydrocarbure dérivé d'un alcool en C₁-C₈ ayant 1 à 4 groupes hydroxyle, R4 représente un groupe alkylène ramifié en C₃-C₄, R₅ représente un groupe alkyle en C₁-C₈, ℓ représente un nombre entier de 1 à 4, m et n représentent indépendamment un nombre positif, les motifs R₄O et CH₂CH₂O sont copolymérisés en séquence, et n/(m+n) est supérieur à 0 mais non supérieur à 0,5 et
ladite huile de lubrification a une viscosité cinétique de 2-30 cSt à 100°C.

5. Huile de lubrification selon la revendication 4, dans laquelle R₃ représente un résidu d'hydrocarbure d'un monoalcool ayant un groupe hydroxyle, ou un groupe méthyle, ou groupe éthyle.

6. Huile de lubrification selon la revendication 4, dans laquelle le rapport de mélange du composé de la formule (I) et du composé de la formule (II) est 25:75 à 75:25 en termes de poids.

7. Composition d'huile de lubrification/réfrigérant pour un compresseur de flon, comprenant une partie principale d'un réfrigérant de flon, et une partie mineure de l'huile de lubrification du compresseur de flon selon l'une quelconque des revendications 1-4.

8. Composition d'huile de lubrification/réfrigérant selon la revendication 7, dans laquelle ladite composition comprend 1-30 % en poids de l'huile de lubrification et 99-70 % en poids du réfrigérant de flon.

9. Composition d'huile de lubrification/réfrigérant selon la revendication 7, dans laquelle le réfrigérant de flon est un réfrigérant de flon exempt de chlore.

10. Composition d'huile de lubrification: réfrigérant selon la revendication 7, dans laquelle le réfrigérant de flon est au moins un réfrigérant de flon contenant de l'hydrogène qui est choisi parmi le groupe constitué des 1,1,1,2-tétrafluoroéthane, 1,1,2,2-tétrafluoroéthane, 1,1-difluoroéthane, difluorométhane et pentafluoroéthane.

11. Procédé pour lubrifier un compresseur de flon en utilisant dans ledit compresseur de flon l'huile de lubrification telle que revendiquée dans l'une quelconque des revendications 1-6.

12. Procédé de lubrification selon la revendication 11, dans lequel ladite composition comprend 1-30 % en poids de l'huile de lubrification et 99-70 % en poids du réfrigérant de flon.

13. Procédé de lubrification selon la revendication 11, dans lequel le réfrigérant de flon est un réfrigérant de flon exempt de chlore.

14. Procédé de lubrification selon la revendication 11, dans lequel le réfrigérant de flon est au moins un réfrigérant de flon contenant de l'hydrogène qui est choisi dans le groupe constitué des 1,1,1,2-tétrafluoroéthane, 1,1,2,2-tétrafluoroéthane, 1,1-difluoroéthane, difluorométhane et pentafluoroéthane.
